# DEMANDE DE BREVET EUROPEEN

(11) **EP 2 192 748 A2**
(43) Date de publication de la demande: **02.06.2010**
(21) Numéro de dépôt: 09177230.1
(22) Date de dépôt: 26.11.2009
(51) Int. Cl.: H04L 29/08, G06F 9/44, G06F 17/30, G06Q 30/00, H04M 7/00

(54) **Procéde de communication et serveur correspondant**

(30) Priorité: 28.11.2008 FR 0858130
(71) Demandeur: France Telecom, 75015 Paris (FR)
(72) Inventeur: Bouille, Philippe, 22560, PLEUMEUR BODOU (FR); Le Huerou, Emmanuel, 22700, SAINT QUAY PERROS (FR)

(57) **Abrégé**

L'invention concerne un procédé de communication entre un utilisateur d'un premier terminal et un contact joignable sur un second terminal, **caractérisé en ce qu**'il comporte:
- une étape (C3) d'adaptation d'un module de mise en relation avec ledit contact, en fonction d'un contexte lié audit contact, déterminant une adresse de communication dudit second terminal,
- une étape (C4) de transmission dudit module audit premier terminal,
- une étape (C5) de réception d'une requête de mise en relation envoyée par ledit premier terminal,
- et une étape d'établissement d'une session de communication entre ledit utilisateur et ledit contact, ou d'envoi d'un message audit contact, en utilisant ladite adresse de communication.

## Description

La présente invention se rapporte de manière générale aux domaines de l'informatique et des télécommunications, et plus précisément aux modules logiciels permettant à un créateur d'une page web de permettre aux internautes de communiquer avec lui en intégrant un de ces modules sur cette page web.

Un tel module logiciel prend souvent la forme d'une touche ou d'un bouton graphique intégrable dans une page web, sur lequel un visiteur de cette page clique par exemple pour téléphoner au contact associé à cette touche ou bouton. De tels modules logiciels facilement intégrables à une page web utilisent le plus souvent un assemblage de codes aux langages HTML (d'après l'anglais "HyperText Mark-up Language"), CSS (d'après l'anglais "Cascading Style Sheet") et de Javascript® et sont alors communément appelés "widgets".

Ainsi un widget dédié à la communication permet à un contact associé à ce widget sur une page web d'être joint tout en préservant son anonymat. Il offre généralement des fonctionnalités basiques telles que:
- la possibilité pour un visiteur de la page web de laisser un message vocal,
- la possibilité pour ce visiteur d'appeler le contact, appelée communément fonctionnalité de "click-to-call",
- ou encore la possibilité pour ce visiteur d'établir un appel visiophonique avec le contact.

Lorsque le visiteur télécharge la page web, il télécharge également le widget, qui communique avec une plate-forme de communication, reliée à un réseau de téléphonie, dans le réseau Internet. C'est cette plate-forme qui établit, sur demande du widget, une communication avec le contact, celui-ci utilisant un téléphone voix sur IP (d'après l'anglais "Internet Protocol") ou un téléphone plus classique si la plate-forme est reliée à un réseau de téléphonie adéquat. Lorsque le visiteur a un logiciel de navigation supportant une technologie RIA (d'après l'anglais "Rich Internet Application"), et que le widget utilise un protocole de communication RIA, aucun téléchargement de logiciel préalable n'est nécessaire par le visiteur.

Cependant, une fois un tel widget configuré par le créateur d'une page web avec un numéro de téléphone de contact ou un identifiant de contact et un lien vers une plate-forme de communication, ce widget est statique: il présente le même aspect et les mêmes fonctionnalités à tous les visiteurs d'une page web intégrant ce widget, quelque soit le contexte. Ainsi les widgets à télécharger pour offrir des fonctionnalités d'appel sur des pages web ne permettent pas aujourd'hui aux visiteurs de ces pages web d'interagir de la manière la plus appropriée avec les contacts associés à ces widgets: par exemple lorsqu'un widget propose à un visiteur d'appeler un contact associé à ce widget par visiophonie, cela nécessite que ce contact soit devant son ordinateur ou ait un visiophone à sa portée. Lorsque ce n'est pas le cas, une tentative d'appel visiophonique par le visiteur échoue. De même, lorsque le contact est en réunion et ne souhaite pas être dérangé, le visiteur est redirigé lors d'une tentative d'appel vers une boîte vocale, alors que le contact aurait peut-être été disponible pour répondre à des messages courts sur son téléphone mobile.

Un des buts de l'invention est de remédier à au moins une partie des inconvénients de la technique antérieure en fournissant un procédé de transmission de données assimilable à un procédé de mise en ligne sur une page électronique d'un module de mise en relation avec un contact, et un serveur implémentant un procédé de communication entre un visiteur de cette page électronique et ce contact, qui permettent d'adapter ce module de mise en relation en fonction d'un contexte lié au contact et/ou au visiteur.

A cette fin, l'invention propose un procédé de transmission de données, comportant une étape de téléchargement d'une page électronique sur un terminal, **caractérisé en ce que** le téléchargement de ladite page électronique déclenche une étape d'envoi, vers un serveur d'adaptation, d'une requête de téléchargement d'un module de mise en relation avec un contact, ledit module ayant été adapté par ledit serveur d'adaptation à un contexte lié audit contact, suite à une étape de détermination dudit contexte par ledit serveur d'adaptation.

Grâce à l'invention, le module de mise en relation s'adapte dynamiquement au contexte dans lequel se trouve le contact associé à ce module. En effet l'adaptation du module de mise en relation par le serveur d'adaptation utilise par exemple des préférences mises à jour par le contact sur un profil accessible par le serveur d'adaptation, ou encore des techniques de localisation du contact ou de détermination automatique de la présence ou de la disponibilité du contact sur ses terminaux, pour offrir à l'utilisateur du module de mise en relation les meilleures conditions pour communiquer avec le contact.

Avantageusement, ladite adaptation dudit module modifie au moins une caractéristique dudit module, choisie dans le groupe comprenant:
- le ou les modes de communication possibles avec ledit contact proposés audit utilisateur par ledit module,
- l'apparence graphique dudit module,
- et la présence d'un ou plusieurs mémos rappelant audit utilisateur une ou plusieurs informations liées audit contact.

Ainsi l'apparence du module de mise en relation est également modifiée en fonction du contexte dans lequel se trouve le contact, ce qui permet à l'utilisateur du module d'être notifié des modes de communication possibles avec le contact, et de choisir parmi ceux-ci celui qui lui convient le plus. Cette modification de l'apparence du module de mise en relation permet également de notifier l'utilisateur d'évènements liés au contact, ce qui permet d'améliorer la qualité d'une communication survenant après cette notification entre le contact et l'utilisateur. En effet le module de mise en relation notifie par exemple l'utilisateur de l'humeur du contact, d'un anniversaire ou d'une fête à lui souhaiter, ou encore de sa relative disponibilité.

Avantageusement, ledit procédé de transmission de données comporte en outre une étape d'identification dudit utilisateur, et ladite adaptation dudit module par ledit serveur d'adaptation tient compte du résultat de ladite étape d'identification.

Ainsi le module de mise en relation permet au contact de communiquer différemment avec les utilisateurs du module en fonction de leurs identités, en fonction de préférences renseignées préalablement par le contact. Par exemple celui-ci aura configuré son module de mise en relation différemment en fonction d'un contexte professionnel ou familial, que le serveur d'adaptation détecte grâce à cette étape d'identification.

L'invention concerne aussi un procédé de communication entre un utilisateur d'un premier terminal et un contact joignable sur un second terminal, **caractérisé en ce qu**'il comporte:
- une étape d'adaptation d'un module de mise en relation avec ledit contact, en fonction d'un contexte lié audit contact, déterminant une adresse de communication dudit second terminal,
- une étape de transmission dudit module audit premier terminal,
- une étape de réception d'une requête de mise en relation envoyée par ledit premier terminal,
- et une étape d'établissement d'une session de communication entre ledit utilisateur et ledit contact, ou d'envoi d'un message audit contact, en utilisant ladite adresse de communication.

Avantageusement, ladite étape d'établissement d'une session de communication entre ledit utilisateur et ledit contact ou d'envoi d'un message audit contact, utilise une conversion protocolaire de données envoyées par ledit premier terminal avant transmission desdites données audit second terminal.

Ainsi le procédé de communication selon l'invention permet au contact de communiquer via un téléphone mobile ou fixe non connecté à Internet, avec un utilisateur ne disposant pas de moyen de communication autre qu'une connexion Internet.

Avantageusement, lorsque le procédé de communication selon l'invention est utilisé pour envoyer un message audit second terminal, et lorsque ce message correspond à une requête de partage d'un contenu, ledit procédé comporte une étape supplémentaire de gestion d'au moins un évènement lié audit partage.

La requête de partage d'un contenu correspond à une demande venant de l'utilisateur pour partager avec le contact un contenu émanant de l'utilisateur ou du contact. Le procédé de communication selon l'invention permet dans chacun de ces deux cas de partager automatiquement le contenu de la manière la plus adaptée à une situation donnée: par exemple si le contenu à partager est fourni par l'utilisateur et que le contact n'est pas disponible, celui-ci reçoit un courrier électronique avec une adresse de ressource vers le contenu que l'utilisateur souhaite partager avec lui, alors que si le contact est en ligne, il est notifié de la demande de l'utilisateur, et sur acceptation de cette demande par le contact, une session de partage est établie entre l'utilisateur et le contact. Dans un autre exemple, si le contenu à partager est fourni par le contact et qu'une session de partage est déjà en cours entre le contact et d'autres utilisateurs, l'utilisateur est ajouté à cette session de partage, grâce par exemple à un pont de conférence multimédia.

Avantageusement, lorsque ledit procédé de communication selon l'invention comporte une étape d'établissement d'une session de communication entre ledit premier terminal et ledit second terminal, ladite étape d'établissement est précédée d'une étape de transmission audit premier terminal d'un flux de données prédéterminé jusqu'à ce que ladite session de communication soit établie.

Cette caractéristique avantageuse du procédé de communication selon l'invention permet au contact de faire transmettre une publicité ou une vidéo de présentation à l'utilisateur avant d'entrer en contact avec lui. La qualité de la communication entre l'utilisateur et le contact en est ainsi améliorée, notamment dans un contexte professionnel d'utilisation de l'invention.

L'invention concerne encore un serveur comportant des moyens de transmission de données entre un utilisateur d'un premier terminal et un contact joignable sur un second terminal, **caractérisé en ce qu**'il comporte en outre:
- des moyens de détermination d'un contexte lié audit contact,
- des moyens d'adaptation d'un module de mise en relation avec ledit contact en fonction dudit contexte, déterminant une adresse de communication dudit second terminal,
- des moyens de transmission dudit module de mise en relation audit premier terminal,
- des moyens de réception d'une requête de mise en relation envoyée par ledit premier terminal,
- et des moyens d'établissement d'une session de communication entre ledit utilisateur et ledit contact, ou d'envoi d'un message audit contact, en utilisant ladite adresse de communication.

Avantageusement, le serveur selon l'invention comporte en outre un annuaire en ligne de modules de mise en relation avec des contacts, permettant à un utilisateur dudit premier terminal de découvrir ledit module de mise en relation en utilisant un identifiant dudit contact.

Cet annuaire permet donc à un utilisateur de retrouver facilement des modules de mise en relation de contacts, sans devoir connaître les adresses de ressource de chacune des pages électroniques sur lesquelles ces modules sont mis en ligne selon l'invention.

L'invention concerne enfin un programme d'ordinateur comportant des instructions pour mettre en oeuvre l'un des procédés selon l'invention, lorsqu'il est exécuté sur un ordinateur.

Le procédé de communication, le serveur et le programme d'ordinateur présentent des avantages analogues à ceux du procédé de transmission de données selon l'invention.

D'autres caractéristiques et avantages apparaîtront à la lecture d'un mode de réalisation préféré décrit en référence aux figures dans lesquelles :
- la figure 1 représente un système de communication mettant en oeuvre le procédé de transmission de données et le procédé de communication selon l'invention dans ce mode de réalisation de l'invention,
- la figure 2 représente une page électronique mettant en ligne selon l'invention un module de mise en relation avec un contact,
- la figure 3 représente des étapes du procédé de transmission de données selon l'invention dans ce mode de réalisation de l'invention,
- la figure 4 représente des étapes du procédé de communication selon l'invention dans ce mode de réalisation de l'invention,
- la figure 5 représente des étapes du procédé de communication selon l'invention dans ce mode de réalisation de l'invention,
- la figure 6 représente un diagramme de flux illustrant une utilisation des procédés de transmission de données et de communication selon l'invention,
- la figure 7 représente un diagramme de flux illustrant une autre utilisation des procédés de transmission de données et de communication selon l'invention.

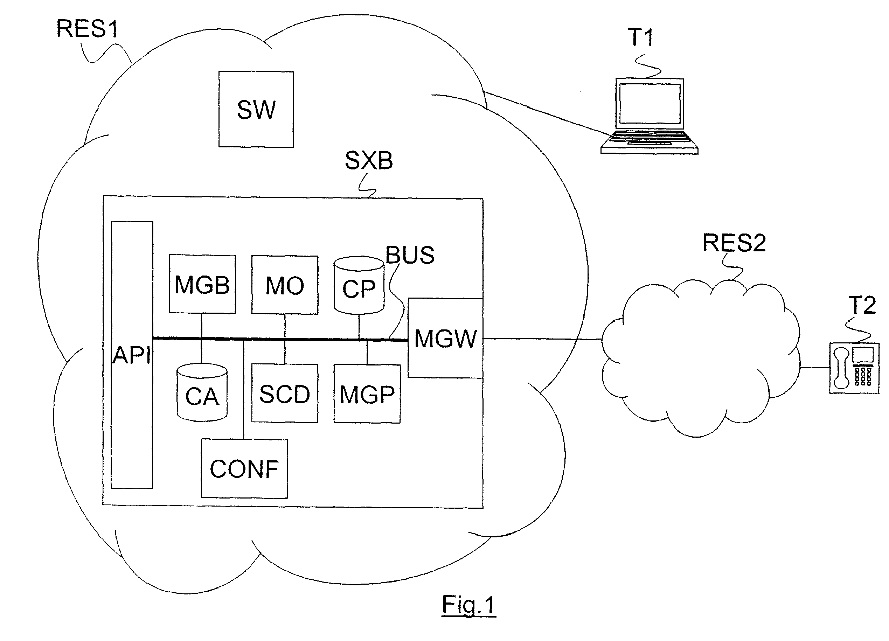

Selon un mode de réalisation de l'invention représenté à la **figure 1**, le procédé de transmission de données selon l'invention est implémenté au moins en partie dans un serveur web SW du réseau Internet RES1, tandis que le procédé de communication selon l'invention est implémenté dans un serveur d'adaptation SXB également dans le réseau Internet RES1.

Le serveur d'adaptation SXB comporte une connexion à un réseau RES2 de transport de données d'architecture IMS (d'après l'anglais "Internet Protocol Multimedia Subsystem"), auquel est connecté un terminal téléphonique T2 d'un contact bénéficiant de la mise en ligne d'un module de mise en relation selon l'invention sur le serveur web SW.

Le serveur d'adaptation SXB comporte également une interface de programmation API basée sur une technologie RIA, telle que Flash® ou JavaFX®, pour communiquer avec le serveur web SW et avec un navigateur d'un terminal T1 d'un utilisateur, connecté au réseau Internet RES1. Le navigateur du terminal T1 implémente également un module Flash®, JavaFX®, Microsoft Silverlight®, ou encore un module d'extension propriétaire, compatible avec l'interface de programmation API du serveur d'adaptation SXB. L'avantage de l'utilisation d'un tel module d'extension RIA propriétaire est qu'il est facilement extensible pour y intégrer des fonctionnalités supplémentaires ou des codecs plus performants que ceux existants dans les modules RIA que l'on trouve sur le marché. Grâce à cette technologie, l'utilisateur du terminal T1 est en mesure de transmettre et de recevoir de la voix et/ou de la vidéo depuis une page électronique, à destination ou en provenance d'une entité utilisant la même technologie, telle que notamment le serveur d'adaptation SXB.

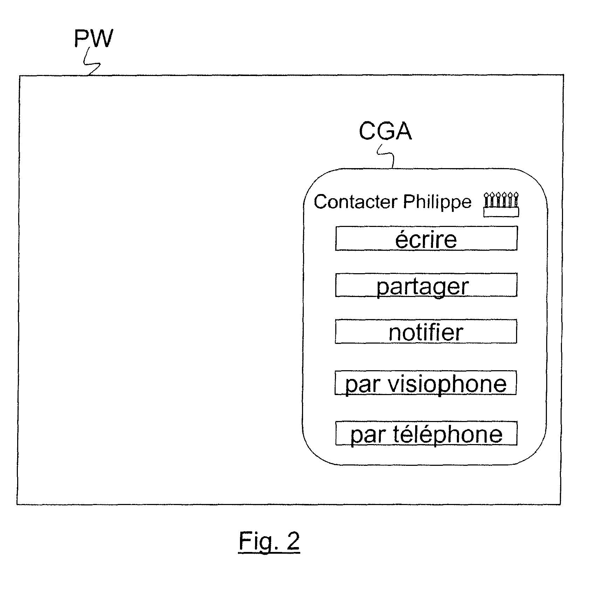

Cette interface de programmation API transmet les messages en provenance du serveur web SW ou du navigateur du terminal T1 à un module logiciel MO d'orchestration du procédé de communication selon l'invention, par l'intermédiaire d'un bus BUS de données de type services web, utilisant typiquement les protocoles SOAP (d'après l'anglais "Simple Object Access Protocol") ou REST (d'après l'anglais "Representational State Transfer"). Le module d'orchestration MO transmet les réponses à ces messages sur le bus BUS à l'interface de programmation API qui les retransmet au serveur web SW ou au navigateur du terminal T1. Le bus BUS permet également au module d'orchestration MO de communiquer avec d'autres modules logiciels ou matériels du serveur d'adaptation SXB:
- un module MGB de génération de modules de mise en relation en fonction d'instructions fournies par le module MO d'orchestration. Les modules de mise en relation générés par ce module MGB sont, dans ce mode de réalisation de l'invention, des widgets ayant chacun une interface graphique active présentant un ou plusieurs boutons d'action. Ainsi le contact joignable sur son téléphone T2 est associé à un widget dont l'interface graphique active est le composant graphique CGA représenté à la **figure 2****.**
- un serveur SCD de contexte de données. Ce serveur est relié par exemple à un serveur de présence auquel le terminal T2 ou d'autres terminaux du contact remontent des informations de connexion ou de disponibilité, et à un serveur de localisation permettant de localiser un terminal mobile du contact.
- une base de données CA de carnets d'adresses des contacts bénéficiant du procédé de transmission de données selon l'invention,
- une base de données CP de profils des contacts bénéficiant du procédé de transmission de données selon l'invention, dans laquelle ceux-ci configurent leurs modules de mise en relation en fonction de préférences. Par exemple le contact joignable sur son téléphone T2 précise l'apparence graphique à donner à son widget en fonction d'évènements prédéterminés, en fonction d'utilisateurs potentiellement présents dans son carnet d'adresses, etc.
- un module MGP de génération de vidéos publicitaires ou de présentation de contacts, ces vidéos étant stockées préalablement dans le module MGP.
- un pont de conférence CONF, permettant d'établir une session de communication téléphonique ou multimédia entre un contact et plusieurs utilisateurs.
- une passerelle de communication MGW, permettant de convertir des messages protocolaires d'une technologie RIA en des messages SIP (d'après l'anglais "Session Initiation Protocol") et inversement, ainsi que de transcoder des données voix ou vidéo d'un format de codec RIA en un format de codec utilisé dans le réseau RES2.

Il est à noter que d'autres implémentations des procédés de transmission de données et de communication selon l'invention sont envisageables. Par exemple en variante, le serveur web SW est intégré dans le serveur d'adaptation SXB, ou la passerelle de communication MGW est externe au serveur d'adaptation SXB. De plus dans cet exemple de réalisation de l'invention, le contact bénéficiant d'un module de mise en relation utilise un terminal T2 connecté à un réseau RES2 d'architecture IMS, mais il est également joignable par son module de mise en relation sur d'autres terminaux, tels qu'un terminal mobile de deuxième ou troisième génération, un terminal fixe connecté à un réseau RTC ("Réseau Téléphonique Commuté") ou un ordinateur connecté au réseau Internet, pourvu que la passerelle de communication MGW soit connectée aux réseaux de communication adéquats. Enfin le terminal T1 et le serveur d'adaptation SXB dialoguent avec une technologie RIA, mais d'autres protocoles sont utilisables, par exemple le protocole SIP.

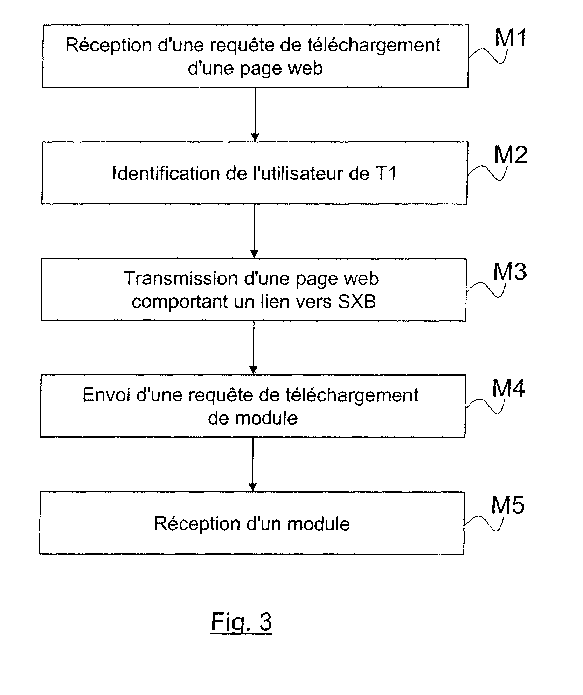

En référence à la **figure 3**, le procédé de transmission de données selon l'invention est maintenant décrit sous la forme d'un algorithme comportant des étapes M1 à M5. Ce procédé est mis en oeuvre en partie dans le serveur SW et en partie dans le terminal T1, l'utilisateur du terminal T1 ayant, via son navigateur, émis une requête http (d'après l'anglais "HyperText Transmission Protocol") de téléchargement d'une page web PW, représentée à la **figure 2**, mettant en ligne le module de mise en relation associé au contact. Cette page web PW est par exemple une page associée au profil du contact dans un site communautaire tel que FaceBook®.

Il est à noter que d'autres cas d'usages sont possibles. Par exemple en variante le serveur web SW est intégré dans le serveur d'adaptation SXB et héberge un annuaire de modules de mises en relation de contacts. Dans ce cas l'utilisateur du terminal T1 accède au module de mise en relation du contact joignable sur le terminal T2 en entrant un identifiant dans cet annuaire. Cet identifiant correspond alors à une méta-identité du contact et est par exemple associé à une adresse de ressource url (d'après l'anglais "uniform resource locator") permettant d'accéder directement au module de mise en relation du contact. Cette adresse de ressource est formée de l'adresse de ressource du serveur web SW et de l'identifiant du contact, par exemple "http://www.xmebuttons.com/contactID".

Dans la variante principale de réalisation de l'invention décrite ci-dessous, le serveur SW est distinct du serveur d'adaptation SXB.

L'étape M1 est la réception, par le serveur web SW, de la requête de téléchargement de la page web PW, émise par le terminal T1.

L'étape suivante M2 est l'identification de l'utilisateur du terminal T1. Deux cas sont à distinguer:
- Si l'utilisateur du terminal T1 accède pour la première fois au serveur SW, alors celui-ci lui demande de s'identifier, par exemple en lui retournant une page web d'identification sur laquelle l'utilisateur doit entrer son adresse de courrier électronique pour poursuivre son téléchargement de la page web PW.
- Si l'utilisateur s'est déjà identifié auprès du serveur SW, par exemple en entrant sur un site communautaire hébergé par le serveur SW et comprenant la page web PW, ou lors d'un précédent téléchargement de la page web PW, alors le serveur SW récupère des données d'identification de l'utilisateur du terminal T1 dans des données d'une session utilisateur associée à cet utilisateur et stockées dans le serveur web SW, ou dans un témoin de connexion (en anglais "cookie") envoyé par le navigateur du terminal T1 avec la requête de téléchargement.

L'étape suivante M3 est l'envoi par le serveur web SW, de la page web PW au terminal T1, cette page PW comportant une redirection vers le serveur d'adaptation SXB, associé au module de mise en relation du contact. Cette redirection prend la forme d'un lien url sur lequel clique l'utilisateur du terminal T1, ou encore d'un code écrit en langage de script et inséré dans la page web PW déclenchant automatiquement cette redirection par le navigateur du terminal T1.

L'étape suivante M4 est l'envoi par le terminal T1 d'une requête de téléchargement du module de mise en relation associé au contact au serveur d'adaptation SXB. L'envoi de cette requête est déclenché par le téléchargement de la page web PW à l'étape précédente M3, qui comporte une redirection vers le serveur d'adaptation SXB. Cette requête de téléchargement est par exemple une requête http comportant en paramètres un identifiant de l'utilisateur du terminal T1, déterminé à l'étape M2, et un identifiant du contact, ces identifiants ayant été préalablement insérés par le serveur web SW dans la page web PW téléchargée à l'étape M3.

Enfin l'étape M5 est la réception, par le terminal T1, du module de mise en relation associé au contact, transmis par le serveur d'adaptation SXB en réponse à la requête http envoyée à l'étape M4. Ce module a été adapté par le serveur SXB à un contexte préalablement déterminé en fonction par exemple des terminaux sur lesquels le contact est disponible, de ses préférences, et également de l'utilisateur du terminal T1.

A la fin de l'étape M5, la page web PW téléchargée sur le terminal T1 à l'étape M3, comprend le module de mise en relation associé au contact. Comme représenté à la **figure 2**, le composant graphique CGA associé à ce module a une apparence qui dépend du contexte déterminé par le serveur d'adaptation SXB. Ainsi dans cet exemple de réalisation de l'invention, on suppose que l'utilisateur du terminal T1 a été identifié par le serveur d'adaptation comme une connaissance du contact pour laquelle celui-ci n'a restreint ni sa disponibilité, ni la visibilité des informations le concernant. Ainsi le composant graphique CGA offre plusieurs boutons d'action à l'utilisateur du terminal T1:
- un bouton d'action "écrire" pour envoyer un message SMS, MMS ou un courrier électronique au contact, en fonction des capacités du terminal où celui-ci est joignable et des préférences du contact,
- un bouton d'action "notifier" pour envoyer un message instantané ou une fenêtre intruse (en anglais "pop-up") au contact,
- un bouton d'action "par visiophone" pour établir une session de visiophonie avec le contact,
- un bouton d'action "par téléphone" pour établir une session téléphonique avec le contact,
- et un bouton d'action "partager", pour permettre à l'utilisateur du terminal T1 de partager un contenu avec le contact, que ce contenu soit fourni par le contact ou l'utilisateur du terminal T1. En effet l'appui sur ce bouton ouvre une fenêtre de configuration permettant à l'utilisateur du terminal T1 de visualiser les options possibles, par exemple les contenus que le contact l'autorise à visualiser, la possibilité de participer à une conférence téléphonique ou visiophonique à venir ou en cours, etc.

Dans cet exemple d'utilisation de l'invention, un symbole rappelle également, sur le composant CGA, que c'est le jour d'anniversaire du contact, permettant ainsi à l'utilisateur du terminal T1 de le lui souhaiter en même temps qu'il le contacte pour un autre sujet.

Dans un autre cas d'usage, par exemple si l'utilisateur du terminal T1 est un client du contact, seuls certains boutons d'actions sont proposés à cet utilisateur, et celui-ci n'a pas de visibilité sur les informations personnelles relatives au contact. Par exemple dans ce cas l'utilisateur ne visualise que deux boutons, un bouton "écrire" et un bouton "don en ligne" pour payer le contact. Dans ce dernier exemple, un module de paiement en ligne est nécessaire dans le serveur d'adaptation SXB, utilisant par exemple une connexion avec un serveur bancaire de transactions.

Il est à noter qu'il n'est pas nécessaire d'implémenter toutes les étapes M1 à M5 pour réaliser le procédé de transmission de données selon l'invention, et que certaines étapes sont réalisables différemment. Par exemple en variantes il n'y a pas d'étape M2 d'identification, ou cette étape M2 d'identification comporte une sous-étape d'authentification de l'utilisateur du terminal T1. Dans une autre variante, les étapes M1 à M3 qui forment une étape de téléchargement de la page web PW du point de vue du serveur web SW, incluent le téléchargement du module de mise en relation. Dans cette dernière variante les étapes M4 et M5 ne sont pas nécessaires et le procédé de transmission de données selon l'invention est alors entièrement mis en oeuvre dans le serveur SW.

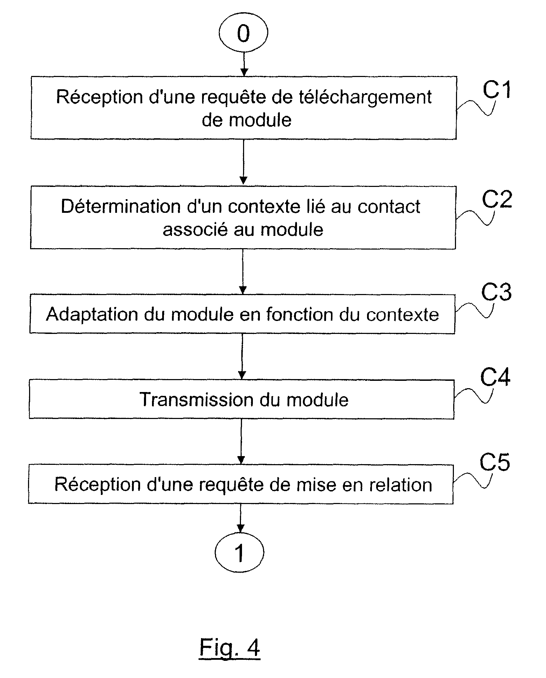

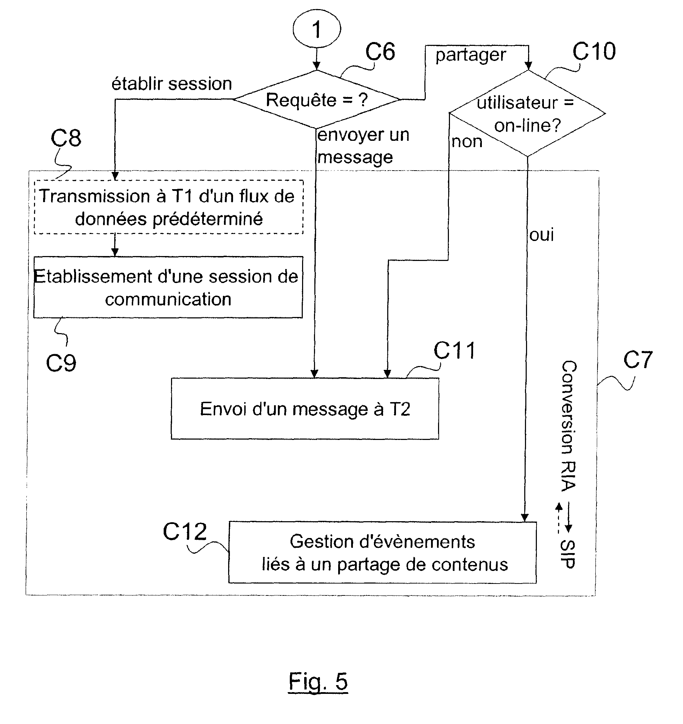

En référence aux **figures 4** **et** **5**, le procédé de communication selon l'invention est maintenant décrit sous la forme d'un algorithme comportant des étapes C1 à C12. Le procédé de communication selon l'invention est mis en oeuvre dans le serveur d'adaptation SXB.

L'étape C1, représentée à la **figure 4**, est la réception par le serveur d'adaptation SXB d'une requête de téléchargement du module de mise en relation associé au contact, envoyée par le terminal T1. Cette étape C1 correspond donc pour le terminal T1 à l'étape M4.

L'étape suivante C2 est la détermination par le serveur d'adaptation SXB d'un contexte lié au contact. Ce contexte est déterminé par le module d'orchestration MO qui utilise:
- les données de contexte fournies par le serveur SCD de données de contexte, telles que la localisation du contact, les terminaux sur lesquelles il est joignable, les données de disponibilité qu'il a renseignées sur ces terminaux,
- les préférences du contact dans la base de données CP de profils,
- et l'identité de l'utilisateur du terminal T1, fournie dans la requête reçue à l'étape C1.

L'étape suivante C3 est l'adaptation du module de mise en relation associé au contact, en fonction du contexte déterminé à l'étape C2. Pour cela, le module d'orchestration MO déduit de ce contexte les caractéristiques à attribuer au module de mise en relation. Par exemple, supposons que le contact est joignable uniquement sur son terminal T2, qu'il dispose de capacités pour faire de la visiophonie, qu'il a indiqué être disponible pour toutes les personnes présentes dans son carnet d'adresses et vouloir leur rendre visible ses informations personnelles, et que l'utilisateur du terminal T1 est dans le carnet d'adresses du contact. Dans ce cas le module d'orchestration MO détermine par exemple que le module de mise en relation associé au contact doit notifier l'utilisateur lors de l'anniversaire du contact et avoir:
- un bouton d'action "écrire" pour envoyer un message SMS encapsulé dans un message "SIP Message" au terminal T2,
- un bouton d'action "notifier" pour envoyer un message instantané au contact sur son terminal T2,
- un bouton d'action "par visiophone" pour établir une session de visiophonie avec le contact sur son terminal T2,
- un bouton d'action "par téléphone" pour établir une session téléphonique avec le contact sur son terminal T2,
- et un bouton d'action "partager", pour permettre à l'utilisateur du terminal T1 de partager un contenu avec le contact, celui-ci utilisant son terminal T2.

Le module d'orchestration MO envoie alors ces caractéristiques au module MGB de génération de modules de mise en relation, qui génère un widget ayant un composant graphique CGA représenté à la **figure 2**. Le module MGB de génération de modules transmet ensuite ce widget au module d'orchestration MO.

Bien entendu si dans un autre exemple le contact est disponible sur plusieurs terminaux, les boutons d'action du module de mise en relation généré par le module MGB auront des caractéristiques prenant en compte cette diversité de terminaux, par exemple le bouton d'action "par téléphone" offrira deux choix de terminaux possibles à l'utilisateur du terminal T1.

L'étape suivante C4 est la transmission par le module d'orchestration MO, du widget généré à l'étape C3, au terminal T1, par l'intermédiaire de l'interface de programmation API. Cette étape C4 correspond à l'étape M5 pour le terminal T1. On suppose maintenant, qu'à la réception de ce widget sur la page web PW, l'utilisateur du terminal T1 clique sur l'un des boutons d'action représenté à la **figure 2****.**

L'étape suivante C5 est alors, pour le serveur d'adaptation SXB, la réception d'une requête de mise en relation envoyée par le navigateur du terminal T1. Il est à noter en effet que les boutons d'action du composant graphique CGA comportent des adresses de ressource qui redirigent le navigateur du terminal T1 vers le serveur d'adaptation SXB. La requête de mise en relation correspond donc par exemple à une requête http ayant en adresse de ressource une adresse de ressource du serveur d'adaptation SXB associée à l'un de ces boutons d'action. Cette requête comporte une adresse de communication permettant de joindre le terminal T1, ici une adresse IP puisque le terminal T1 utilise une technologie RIA, en supposant qu'il n'y ait pas de NAT (d'après l'anglais "Network Address Translation").

L'étape suivante C6 est un test effectué par le module d'orchestration MO sur le contenu de la requête reçue à l'étape C5, pour déterminer si la communication demandée par l'utilisateur du terminal T1 avec le contact va mettre en oeuvre un établissement de session, un envoi d'un message, et/ou une gestion d'évènements liés à un partage de contenu.

Dans ces trois cas, lorsque le terminal T2 ne supporte pas la même technologie RIA que le terminal T1, ou lorsque le contact n'a pas démarré un navigateur supportant cette technologie sur son terminal T2, une conversion protocolaire entre les messages envoyés par le terminal T1, qui utilisent un format RIA, et les messages SIP correspondants sur le réseau RES2, est effectuée par la passerelle de communication MGW dans le serveur d'adaptation SXB. Cette passerelle effectue également un transcodage entre les codecs RIA et les codecs supportés dans le réseau RES2. Cette conversion protocolaire et ce transcodage sont figurés par l'étape C7 sur la **figure 5**, qui englobe les étapes C8, C9, C11 et C12, celles-ci bénéficiant de cette conversion et de ce transcodage.

L'étape C6 permet au module d'orchestration MO de déterminer l'étape suivante:
- si la requête reçue à l'étape C5 correspond à un appui sur les boutons "par téléphone" ou "par visiophone", alors l'étape suivante est
   o l'étape C8 si le contact a indiqué dans ses préférences souhaiter transmettre une présentation ou une publicité à l'utilisateur avant de lui parler par téléphone ou par visiophone,
   o sinon l'étape suivante est l'étape C9,
- si la requête reçue à l'étape C5 correspond à un appui sur les boutons "notifier" ou "écrire", alors l'étape suivante est l'étape C11,
- sinon la requête reçue à l'étape C5 correspond à un appui sur le bouton "partager" et l'étape suivante est l'étape C10.

L'étape C8, qui n'a lieu que lorsque l'utilisateur du terminal T1 souhaite établir une conférence téléphonique ou visiophonique avec le contact et lorsque celui-ci a prévu dans ce cas de lui envoyer préalablement une publicité ou une vidéo de présentation, est maintenant décrite. L'étape C8 est la transmission par le module MGP de génération de vidéos publicitaires ou de présentation de contacts, d'une vidéo prédéterminée par le contact dans son profil, à l'utilisateur du terminal T1. Cette transmission est commandée par le module d'orchestration MO, qui supervise l'établissement de l'appel téléphonique ou visiophonique entre le terminal T1 et le terminal T2, correspondant à l'étape C9. Dès que le contact décroche son terminal T2, le module d'orchestration stoppe la transmission de la vidéo par le module MGP de génération de vidéos publicitaires ou de présentation de contacts, et connecte le terminal T1 et le terminal T2. L'étape C8 a donc lieu pendant l'étape C9.

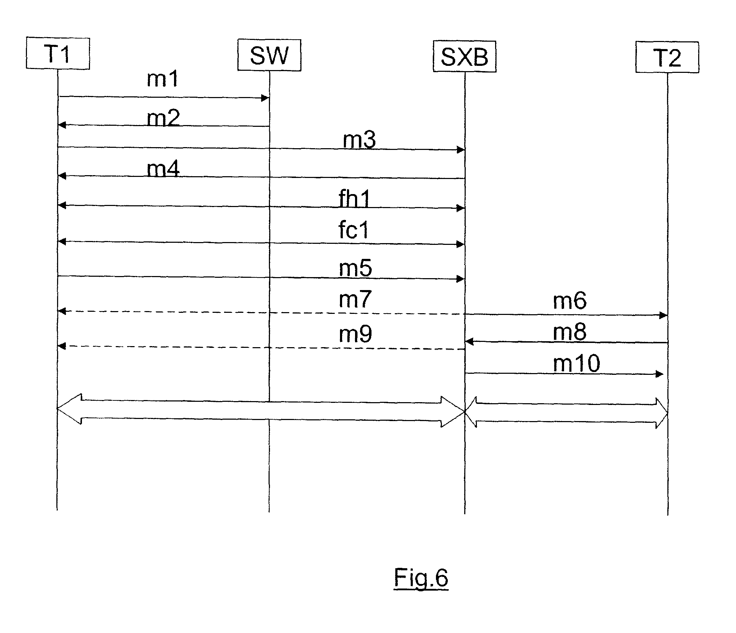

L'étape C9 est l'établissement d'une session de téléphonie ou de visiophonie entre le terminal T1 et le terminal T2, suivant que l'utilisateur du terminal T1 a cliqué sur le bouton d'action "par téléphone" ou "par vidéophone". Cette étape comprend ou ne comprend pas l'étape C8 suivant que le contact a indiqué vouloir transmettre une vidéo de publicité ou de présentation avant de prendre l'appel téléphonique ou visiophonique de l'utilisateur du terminal T1. Cette étape sera décrite en détail plus loin en relation avec la **figure 6****.**

L'étape C10 est un test sur la disponibilité du contact pour partager un contenu, effectué par le module d'orchestration MO en utilisant le serveur SCD de contexte de données, lorsque l'utilisateur du terminal T1 a indiqué vouloir partager un contenu fourni par lui avec le contact. Si le contact n'est pas disponible, alors l'étape suivante est l'étape C11, sinon l'étape suivante est l'étape C12.

L'étape C11 est l'envoi par le serveur d'adaptation SXB, et plus précisément par la passerelle de communication MGW, d'un message "SIP Message" au contact, correspondant, suivant le bouton d'action activé par l'utilisateur du terminal T1, à un message délivré sous forme d'un SMS, ou d'un message instantané, ou encore d'un message d'invitation à consulter un contenu à une adresse de ressource incluse dans ce message.

L'étape C12 est la gestion d'évènements liés à un partage de contenu. Cette étape a lieu lorsque le contact est disponible pour partager un contenu fourni par lui-même ou par l'utilisateur du terminal T1, avec celui-ci. Cette gestion d'évènements est effectuée par le module d'orchestration MO et inclut par exemple:
- la notification au contact que l'utilisateur du terminal T1 souhaite participer à une conférence téléphonique ou visiophonique, comportant une demande d'autorisation à participer à cette conférence,
- l'ajout de l'utilisateur du terminal T1 à cette conférence lorsque le contact répond positivement, en utilisant le pont de conférence CONF,
- la notification au contact que l'utilisateur du terminal T1 souhaite partager une vidéo avec lui, contenant une demande d'acceptation pour l'utilisateur,
- l'établissement d'une session de partage de cette vidéo lorsque le contact répond positivement à cette demande d'acceptation.

Il est à noter qu'il n'est pas nécessaire d'implémenter toutes les étapes C1 à C12 pour réaliser le procédé de communication selon l'invention. De plus certaines étapes sont réalisables différemment. Par exemple l'étape C7 n'est pas toujours nécessaire, l'étape C8 est optionnelle et est utilisable non seulement pour envoyer des vidéos à l'utilisateur du terminal T1, mais aussi des annonces vocales ou des images. Enfin, en variante la requête de mise en relation reçue à l'étape C5 comporte éventuellement un numéro d'un terminal différent du terminal T1, par exemple un numéro de téléphone mobile, pour que le serveur d'adaptation SXB établisse à l'étape C9 une session de communication entre le contact sur son terminal T2 et l'utilisateur sur son téléphone mobile. Il est à noter que dans cette variante, si le téléphone mobile de l'utilisateur est compatible avec le protocole SIP, l'étape C7 de conversion et de transcodage n'est pas nécessaire.

On décrit maintenant plus précisément, en relation avec la **figure 6**, l'établissement d'une session de communication téléphonique ou visiophonique entre l'utilisateur du terminal T1 et le contact joignable sur son terminal T2, l'utilisateur du terminal T1 utilisant le module de mise en relation associé au contact. On suppose dans cet exemple de réalisation de l'invention, que le navigateur du terminal T1 utilise la technologie RIA Flash®, et que le terminal T2 ne supporte pas cette technologie.

Le navigateur du terminal T1 télécharge préalablement la page web PW mettant en ligne le module de mise en relation associé au contact, ce qui correspond aux messages m1 à m4 sur la **figure 6**:
- le message m1 représente la requête de téléchargement de la page web PW envoyée par le navigateur au serveur web SW,
- le message m2 représente la redirection de téléchargement du module de mise en relation envoyée par le serveur web SW au navigateur du terminal T1
- le message m3 représente la requête de téléchargement du module envoyée par le navigateur du terminal T1 vers le serveur d'adaptation SXB,
- et le message m4 représente la transmission par le serveur d'adaptation SXB du module de mise en relation au navigateur du terminal T1.

Lorsque l'utilisateur du terminal T1 appuie sur un des boutons d'action "par téléphone" ou "par vidéophone", le navigateur du terminal T1 déclenche avec le serveur d'adaptation SXB, une synchronisation appelée "handshake" selon le protocole RTMP (d'après l'anglais " Real Time Messaging Protocol"), représentée par le flux fh1 sur la **figure 6**. Cette synchronisation est suivie de la création d'une connexion réseau RTMP "NetConnection" représentée par le flux fc1 entre le serveur d'adaptation SXB et le navigateur du terminal T1. Puis le navigateur du terminal T1 envoie au serveur d'adaptation SXB un message m5, correspondant à la requête de mise en relation reçue à l'étape C5 du procédé de communication selon l'invention encapsulée dans un message RTMP "NetStream". A la réception de cette requête, le module d'orchestration MO fait établir une session de communication par la passerelle de communication MGW entre le terminal T1 et le terminal T2.

Pour cela, la passerelle de communication MGW contacte le terminal T2 par un message m6 "SIP Invite", les codecs étant choisis via le protocole SDP conformément au RFC (d'après l'anglais "Request For Comment") 3264. La passerelle de communication MGW transmet en parallèle le retour de sonnerie au terminal T1 dans un message RTMP "NetStream" représenté par le message m7. Lorsque le contact décroche, le terminal T2 envoie un message SIP "200 OK" représenté par le message m8 à la passerelle de communication MGW, qui envoie un nouveau message RTMP "NetStream" représenté par le message m9 au terminal T1, permettant d'arrêter le retour de sonnerie. Enfin la passerelle de communication MGW envoie un message SIP "Ack" au terminal T2, représenté par le message m10. La session de communication téléphonique ou visiophonique entre le terminal T1 et le terminal T2 est alors établie, le flux de données correspondant subissant un transcodage adéquat au niveau de la passerelle de communication MGW.

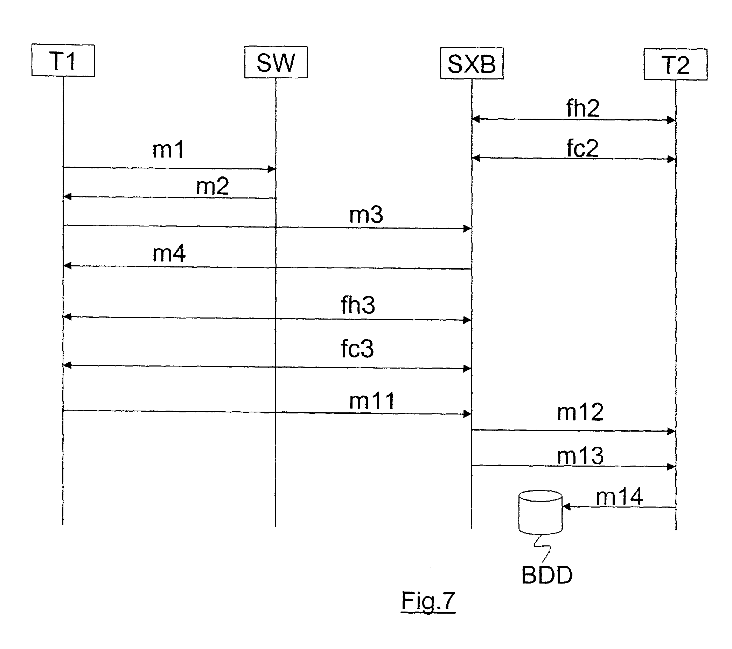

On décrit maintenant plus précisément, en relation avec la **figure 7**, le partage d'un contenu entre l'utilisateur du terminal T1 et le contact joignable sur son terminal T2, l'utilisateur du terminal T1 utilisant le module de mise en relation associé au contact. On suppose dans cet exemple de réalisation de l'invention, que les navigateurs des terminaux T1 et T2 utilisent la technologie RIA Flash®. Dans cet exemple de réalisation, il n'est donc pas nécessaire d'effectuer une conversion protocolaire et un transcodage au niveau de la passerelle de communication MGW.

On suppose de plus dans cet exemple que le contact s'est préalablement connecté au serveur d'adaptation SXB, pour s'enregistrer comme disponible sur son module de mise en relation depuis le navigateur de son terminal T2. Lors de cet enregistrement, le module d'orchestration MO synchronise la passerelle de communication MGW avec le terminal T2 selon la procédure RTMP "handshake", représentée par le flux fh2 sur la **figure 7**. Cette synchronisation est suivie de la création d'une connexion réseau RTMP "NetConnection" représentée par le flux fc2 entre la passerelle de communication MGW et le terminal T2.

Puis le navigateur du terminal T1 télécharge la page web PW mettant en ligne le module de mise en relation associé au contact, ce qui correspond aux messages m1 à m4, identiques à ceux de la **figure 6**, et donc non décrits à nouveau ici.

Une fois cette page web PW téléchargée, lorsque l'utilisateur du terminal T1 appuie sur le bouton d'action "partager", puis tape sur son terminal T1 une adresse de ressource d'un contenu à partager avec le contact, le navigateur du terminal T1 déclenche entre le serveur d'adaptation SXB et le navigateur du terminal T1, une procédure RTMP "handshake" de synchronisation, représentée par le flux fh3 sur la **figure 7**. Cette synchronisation est suivie de la création d'une connexion réseau RTMP "NetConnection" représentée par le flux fc3, entre le serveur d'adaptation SXB et le navigateur du terminal T1. Puis le navigateur du terminal T1 envoie au serveur d'adaptation SXB une requête de mise en relation m11 comportant cette adresse de ressource, encapsulée dans un message RTMP "NetStream".

Le module d'orchestration MO crée ensuite un flux, comportant une notification d'une demande de partage de contenu de la part de l'utilisateur du terminal T1, que la passerelle de communication MGW transmet au terminal T2 dans un message RTMP "NetStream" représenté par le message m12 sur la **figure 7****.** Ce message est suivi d'un autre message RTMP "NetStream", représenté par le message m13, envoyé par la passerelle de communication MGW au terminal T2 et comportant l'adresse de ressource précédemment reçue par le module d'orchestration MO dans la requête m11.

A la réception de ces messages m12 et m13, on suppose que le contact clique sur l'adresse de ressource comprise dans le message m13 et qui lui est présentée par son terminal T2, ce qui provoque l'envoi d'un message m14 vers une base de données BDD comportant le contenu à partager, ce message m14 étant une requête http de téléchargement de ce contenu.

## Revendications

1. Procédé de communication entre un utilisateur d'un premier terminal (T1) et un contact joignable sur un second terminal (T2), **caractérisé en ce qu'**il comporte:
- une étape (C3) d'adaptation d'un module de mise en relation avec ledit contact, en fonction d'un contexte lié audit contact, déterminant une adresse de communication dudit second terminal (T2),
- une étape (C4) de transmission dudit module audit premier terminal (T1),
- une étape (C5) de réception d'une requête (m5) de mise en relation envoyée par ledit premier terminal (T1),
- et une étape d'établissement d'une session (C9) de communication entre ledit utilisateur et ledit contact, ou d'envoi d'un message audit contact, en utilisant ladite adresse de communication.

2. Procédé de communication selon la revendication 1, dans lequel ladite étape d'établissement d'une session (C9) de communication entre ledit utilisateur et ledit contact, ou d'envoi d'un message audit contact, utilise une conversion protocolaire de données envoyées par ledit premier terminal (T1) avant transmission desdites données audit second terminal (T2).

3. Procédé de communication selon la revendication 1 ou 2, comportant une étape (C11) d'envoi d'un message audit second terminal (T2), dans lequel lorsque ledit message correspond à une requête de partage d'un contenu, ledit procédé comporte une étape (C12) supplémentaire de gestion d'au moins un évènement lié audit partage.

4. Procédé de communication selon l'une quelconque des revendications 1 à 3, comportant une étape (C9) d'établissement d'une session de communication entre ledit premier terminal (T1) et ledit second terminal (T2), dans lequel ladite étape (C9) d'établissement est précédée d'une étape (C8) de transmission audit premier terminal (T1) d'un flux de données prédéterminé jusqu'à ce que ladite session de communication soit établie.

5. Serveur comportant des moyens de transmission de données entre un utilisateur d'un premier terminal (T1) et un contact joignable sur un second terminal (T2), **caractérisé en ce qu'**il comporte en outre:
- des moyens de détermination d'un contexte lié audit contact,
- des moyens d'adaptation d'un module de mise en relation avec ledit contact en fonction dudit contexte, déterminant une adresse de communication dudit second terminal (T2),
- des moyens de transmission dudit module de mise en relation audit premier terminal (T1),
- des moyens de réception d'une requête (m5) de mise en relation envoyée par ledit premier terminal (T1),
- et des moyens d'établissement d'une session de communication entre ledit utilisateur et ledit contact, ou d'envoi d'un message audit contact, en utilisant ladite adresse de communication.

6. Serveur selon la revendication 5, **caractérisé en ce qu'**il comporte en outre un annuaire en ligne de modules de mise en relation avec des contacts, permettant à un utilisateur dudit premier terminal (T1) de découvrir ledit module de mise en relation en utilisant un identifiant dudit contact.

7. Programme d'ordinateur comportant des instructions pour mettre en oeuvre le procédé selon l'une quelconque des revendications 1 à 4, lorsqu'il est exécuté sur un ordinateur.
